# EUROPEAN PATENT APPLICATION

(11) **EP 4 321 748 A1**
(43) Date of publication of application: **14.02.2024**
(21) Application number: 23386073.3
(22) Date of filing: 02.08.2023
(51) Int. Cl.: F03D 3/04

(54) **VERTICAL AXIS GENERATOR**

(30) Priority: 10.08.2022 GR 20220100672
(71) Applicant: Enellas Energiaki Anonimi Eteria, 17456 Alimos (GR)
(72) Inventor: Giakas, Panagiotis, 17456 Alimos (GR)

(57) **Abstract**

The invention relates to a vertical axis generator, which has fixed blades (1) around its mast (2). It also has rotating blades (3), (4), which have at the bottom fixed rotating magnets (7). On the base (8) of the generator there are fixed magnets (9), so that their similar poles are opposite to the rotating magnets (7) and thus repel each other during the rotation of the blades, reducing friction and increasing sliding. The generator further has a differential with a table bearing (10), which is enclosed by two plate supports (11), (12), which are held together by plates (13).

## Description

### FIELD OF ART

The invention relates to the field of technologies or applications for dealing with or adapting to climate change. In particular, it relates to the field of reducing greenhouse gas emissions, in relation to the production, transmission or distribution of electricity. Even more specifically it relates to the field of energy production through renewable energy sources. It specifically relates to the field of energy production through wind energy combined with the use of magnets.

### BACKGROUND OF THE INVENTION

The vertical axis generator disclosed in the present invention has not been disclosed in the prior art.

Wind turbines are one of the main means for exploiting renewable energy sources, specifically wind energy. Although renewable energy sources are characterized as soft sources, since they do not require any active intervention, such as mining, pumping or burning, as the energy sources used until now, but they simply exploit the already existing energy flow in nature and although they are considered clean forms of energy, very "friendly" to the environment, since they do not release hydrocarbons, carbon dioxide or toxic and radioactive waste, like the rest of the energy sources used on a large scale, this does not mean that they do not present disadvantages. For example, exploitation of wind energy can only be done with wind turbines, of large size, which require significant air flow to operate. Due to these factors, their placement is usually done outside the urban environment, on mountain tops and often in arrays, resulting in so-called visual pollution. At the same time, their operation often causes significant noise, while bird deaths from their blades have also been reported. Significant further disadvantages of all renewable energy sources, especially wind turbines, are that they have a rather small efficiency factor, of the order of 30% or even lower. Therefore, a fairly large initial cost of installation on a large area of land is required. For this reason they are still used as supplementary energy sources. For the above reason, they cannot currently be used to meet the needs of large urban centers. In addition, the supply and performance of wind energy depends on the period of year, but also on the latitude and climate of the area in which they are installed.

It is thus an object of the present invention to advantageously address the aforementioned disadvantages and shortcomings of the prior art by proposing a vertical axis generator.

A further object of the present invention is to provide a vertical axis generator, which exploits the wind, regardless of its direction, since it has both large and small blades.

It is a further object of the present invention to provide a vertical axis generator, which has a base with fixed and rotating magnets, by which friction during rotation is reduced, while at the same time slide is created and the weight to be rotated is substantially reduced.

An advantage of the invention is the fact that it has the possibility of permanent rotation of the blades, even in wind absence conditions, since the magnets significantly reduce the friction between the base and the blades.

A further advantage of the invention is the fact that this particular generator can operate at low speeds, quietly, thus making the construction suitable even for roofs of buildings in an urban environment.

Another object of the invention is the provision of a vertical axis generator, which has at the base of its mast metal plates and between them, a table bearing.

These and other objects, features and advantages of the invention will become apparent in the following detailed description.

### BRIEF DESCRIPTION OF THE DRAWINGS

The invention will become apparent to those skilled in the art by reference to the accompanying drawings in which it is illustrated in an illustrative non-limiting manner.
Figure 1 shows a perspective indicative illustration of the generator of the present invention with its fixed and moving blades.

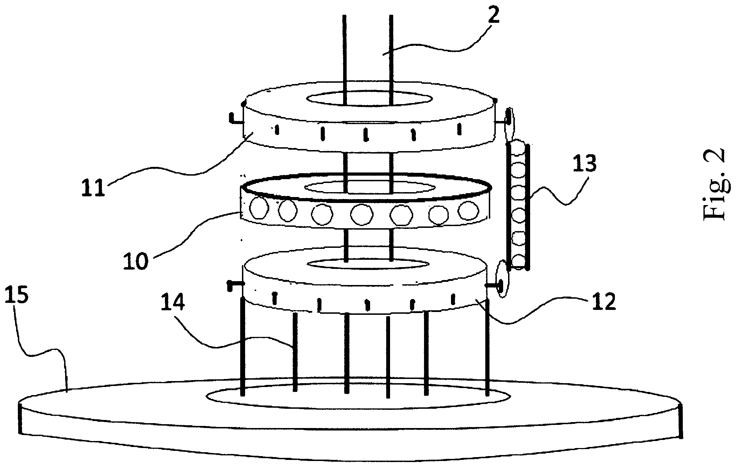

Figure 2 shows the generator differential in detail, along with its plates and table bearing,
Figures 3 (a) - (b) show one of the internal blades of the generator, as well as a top view of its fixed and rotating blades.
Figures 4 (a) - (d) show at successive time moments the movement of the generator blades and the position of its magnets.

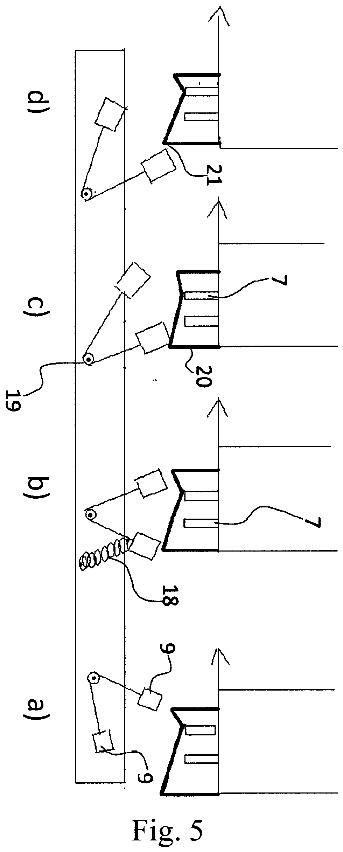

Figures 5(a) - (d) show sequential time instants of alternative embodiment for the magnet structure used by the generator of the invention.

### DETAILED DESCRIPTION OF A PREFERRED EMBODIMENT

Referring now to the accompanying drawings we will describe exemplary embodiments of the vertical axis generator, so that its advantages and technical characteristics become apparent.

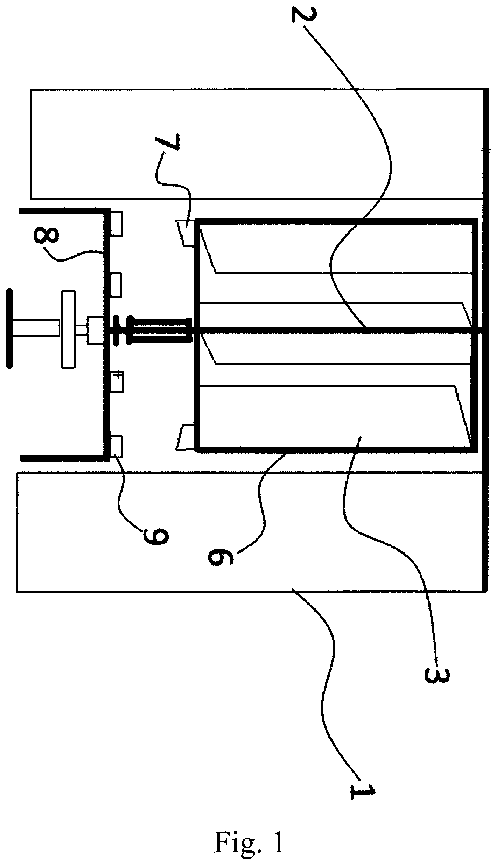

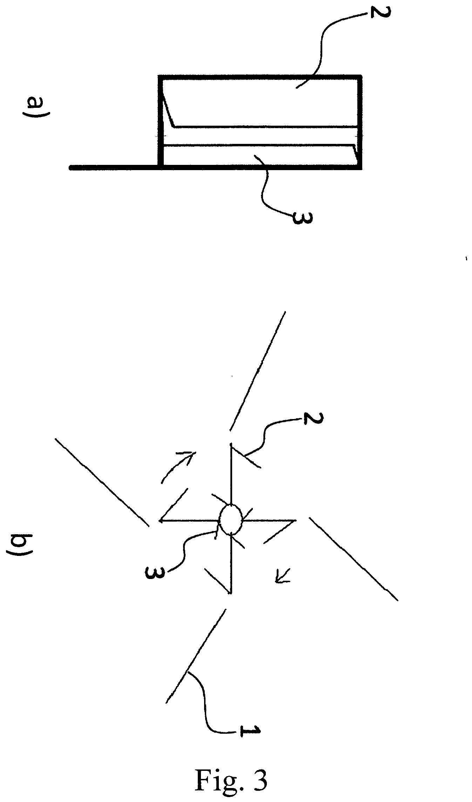

The vertical axis generator of the invention has four external fixed blades (1), Fig. 1, around the generator mast (2), indicatively placed at every 90°. On the mast (2) there are four pairs of rotating blades, Fig. 3 (b). Each pair of rotating blades consists of a large rotating blade (3), Fig. 3 (a), and a small rotating blade (4). The two blades (3), (4) are parallel to each other and the angles they form with the axis that joins them are alternate. At the bottom of the frame (6) on which the rotating blades (3), (4) are mounted, two rotating magnets (7) are attached to each blade, which rotate together with the blades (3), (4). Accordingly, on the base (8) of the generator there are fixed magnets (9). The placement of the magnets (7), (9) is such that the similar poles face each other and repel each other.

At the bottom of the generator mast (2) is the generator differential, which includes a table bearing (10), which is enclosed by two plate supports (11), (12), which are held together by plates (13). At the bottom of the lower plate base (12) there are screws (14) with which the generator differential is connected to the electric motor (15), which is used.

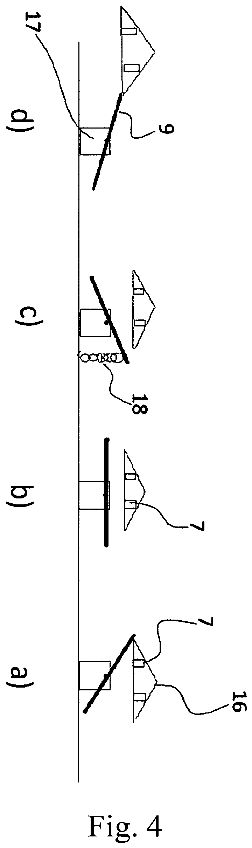

The pairs of rotating magnets (7) are located on a triangular retaining base (16), which is located on the lower edge of each rotating blade (3), (4). Accordingly, the fixed magnets (9) are each on their own base (17), which in turn is placed on the base (8) of the generator. The specific fixed magnets (9) are parallelograms and have a return plate (18) at one end. As can therefore be seen in the successive moments of Fig. 4, during the rotation of the blades (3), (4), initially the first end of the triangular retaining base (16) approaches the raised end of the fixed magnet (9) and because of their similar polarity, the first rotating magnet (7) repels the fixed magnet (9), with the result that it initially becomes horizontal and then, due to the continued repulsion from the second rotating magnet (7), changes its inclination. When the triangular retaining base (16) with the rotating magnets (7) is no longer under the influence of the rectangular fixed magnet (9), the latter returns to its original position due to the return plate (18). In this way, a permanent rotation of the blades (3), (4) is achieved even in wind absence conditions.

In an alternative embodiment of the invention, the fixed magnets (9) are located on a V-shaped base (17) at the base of which there is a bearing (19), and are held by a return plate (18). Accordingly, the two rotating magnets (7) of each blade (3), (4) are located at the bottom of the blades (3), (4), on a W-shaped support base (20), its lower end (21) working as a pin to prevent accidental attraction between the magnets, during the rotation of the blades. The logic of operation is also based here on the similar polarity and the repulsion of the magnets during rotation.

It should be noted at this point that the description of the invention was made with reference to exemplary embodiments to which it is not limited. Thus, any change or modification in terms of shape, dimensions, morphology, materials used and construction and assembly components, as long as they do not constitute a new inventive step and do not contribute to the technical development of what is already known, are considered included in the aims and objectives of the present invention as summarized in the claims hereinbelow.

## Claims

1. Vertical axis generator, consisting of four external fixed blades (1), placed per 90°, around the mast (2) and four pairs of rotating blades with a large rotating blade (3), with a small rotating blade (4), parallel to each other, at the lower part of each one two rotating magnets (7) being mounted, the generator having a base (8) with fixed magnets (9) mounted and a differential, the latter including a table bearing (10), which is enclosed by two plate support bases (11), (12), which are held together by plates (13), and the differential is connected to an electric motor (15), **characterized in that** the similar poles of the rotating magnets (7) and the fixed magnets ( 9) are placed facing each other and repel each other.

2. A vertical axis generator, according to claim 1, **characterized in that** the rotating magnets (7) are located on a triangular holding base (16), which is located at the lower edge of each rotating blade (3), (4).

3. A vertical axis generator, according to claim 1, **characterized in that** the fixed magnets (9) are parallel.

4. A vertical axis generator, according to claim 1, **characterized in that** the fixed magnets (9) are located on a base (17), in a V shape, at the base of which there is a bearing (19).

5. A vertical axis generator, according to claim 1, **characterized in that** the rotating magnets (7) of each blade (3), (4) are located on a W-shaped support base (20).
